# EUROPEAN PATENT SPECIFICATION

(11) **EP 3 103 541 B1**
(45) Date of publication and mention of the grant of the patent: **27.11.2019**
(21) Application number: 16173116.1
(22) Date of filing: 06.06.2016
(51) Int. Cl.: B01D 29/41, B01D 29/60, B01D 29/64

(54) **SYSTEM AND METHOD FOR SEPARATING A SOLID FRACTION FROM A FLUID**
SYSTEM UND METHODE ZUR ABTRENNUNG EINER FESTEN FRAKTION AUS EINEM FLUID
SYSTÈME ET MÉTHODE POUR SÉPARER UNE FRACTION SOLIDE D'UN FLUIDE

(30) Priority: 09.06.2015 IT UB20151045
(43) Date of publication of application: 14.12.2016
(73) Proprietor: Diemme Enologia S.p.A., 48022 Lugo (Ravenna) (IT)
(72) Inventor: MELANDRI, Filippo, 40141 Bologna (IT); STASSI, Alberto, 48018 Faenza (RA) (IT); CASELLI, Juri, 48026 Russi (RA) (IT)
(74) Representative: Corradini, Corrado

(56) References cited:
- EP-A1- 0 372 083
- GB-A- 1 559 080
- JP-A- S63 100 909
- US-A- 4 410 433

## Description

### TECHNICAL FIELD

The present invention relates to a separating group of a solid fraction from a fluid containing the solid fraction, and the relative functioning method.

In more detail, the invention relates to a separating group of a particulate from a fluid, for example a food, having a high viscosity and/or high solids content, for example colloids, fermented scum and/or sweet grape must or others besides, provided with a filter group, for example of a dynamic filtration type.

### PRIOR ART

As is known, in the field of filtration, separating groups are used, for example of a discontinuous type, which are provided with a filter group comprising at least a filter chamber, for example a plurality of filter chambers, each of which is provided with an inlet for the fluid to be filtered, at least a first outlet for the solid fraction separated from the fluid to be filtered, and a second outlet for a filtered fluid fraction.

A filter wall or filter cloth/membrane, for example having a flat disc shape, is located in the filter chamber in such a way as to subdivide the internal volume thereof into two environments, of which a first environment communicating with the inlet and the first outlet and a second environment communicating with the second outlet.

Further, at each filter wall it is possible to include a shaker element located in the first environment, i.e. the environment in which the fluid to be filtered is present and/or the solid fraction separated from the liquid fraction, which for example is defined by a disc or a rotating impeller, the longitudinal extension of which is such as to cover, during rotation thereof, the whole surface of the filter wall. The disc or impeller, in practice, rotates parallel to and at a distance from the surface facing the first environment of the filter wall, for example coaxial therewith, creating a turbulent motion in the fluid being filtered.

The functioning of the separating groups includes supplying a dosed quantity of fluid to be filtered into the filter group and setting the shaker elements in rotation to decant through the second outlet the liquid fraction which gradually separates from the fluid being filtered.

The supply of the fluid to be filtered in the filter group continues up to when the concentration of the solids reaches a desired value. When this desired value of concentration has been reached the supply of the fluid to be filtered is interrupted, the filter group stopped and the separated solid fraction is discharged through the first outlet.

Once discharged the filter group is washed or rinsed with water or another washing fluid, for example a chemical wash to prepare the separating group for a new filtration cycle.

For example EP0372083 discloses a slurry filtering apparatus having valves and valve seats of abrasion-resistant metal, a pump pressurizes and ejects a slurry containing hard particles at a high concentration. The flow of slurry is forced upon a filter surface in a direction oblique to it. Since the ejection of slurry causes cavitation and abrupt changes in velocity in the flow, shearing forces are created to scatter larger particles. This prevents filter-cake deposition while permitting parallel-flow filtration.

GB1559080 discloses a horizontal leaf filter for filtering solids, which contain liquid. The horizontal leaf filter comprises a casing having an inlet for the liquid in a lower portion of the casing, a first outlet for filtered liquid and a second outlet for solids, a stack of horizontal filter plates mounted on a vertical column within the casing, the column serving to conduct liquid having passed through the filter plates to said first outlet, and means for removing unfiltered liquid from an upper portion of the casing and returning it to the lower portion of the casing, thereby to increase the flow velocity of unfiltered liquid within the casing.

JPS63100909 discloses a method and apparatus for filtering slurry, wherein the slurry is filled in a slurry tank and stirred with a stirrer, while a rotary medium is rotated at a low speed by staring a driving motor. Simultaneously, a compressive transfer pump is started, and slurry is sprayed continuously from an injection nozzle at the end of a liquid transfer tube in which slurry passes through toward an upper net layer of the rotary filter medium. As a result, cloggings of the net layer of the filter medium are minimized to eliminate any possibilities of formation of a cake layer, and not only filter capability is enhanced, but also the troubles of removing and washing the filter medium can be saved to achieve a continuous operation and good filter efficiency.

A drawback encountered in tilter groups of known type is that the number of washes between one work cycle and another is often very high and as the washing cycles constitute a "dead time" as well as representing a cost for consumption and elimination of washing liquids for the separating group, the greater the number of washes (or the frequency thereof during the day), the smaller the average flow rate of the filtration, i.e. the volume of the filtered liquid fraction, i.e. the net volume of filtered liquid fraction on a daily basis, in the hypothesis of a continuous use over a twenty-four hour period of the filter group.

An aim of the present invention is to obviate the above-mentioned drawbacks in the prior art and make the separating groups more high-performance and efficient than the prior art, with a solution that is simple, rational and relatively economical.

An aim of the invention is therefore to reduce dead times in the working cycle of the separating groups, thus reducing the number of washes, and at the same time reducing the use of washing liquid.

Also, an aim of the invention is to enable correct positioning of the filter walls internally of the filter group, in any use condition of the separating group. These aims are attained by the characteristics of the invention recited in the independent claims. The dependent claims delineate preferred and/or particularly advantageous aspects of the invention.

### DESCRIPTION OF THE INVENTION

The invention relates in particular to a separating group of a solid fraction of a fluid containing the solid fraction, comprising:
- a filter group of a dynamic type comprising at least a filter chamber associated to an inlet for the fluid to be filtered, at least a first outlet for the solid fraction separated from the fluid to be filtered and to a second outlet for a filtered fluid fraction located in the filter chamber in such a way as to subdivide the internal volume thereof into two environments, of which a first environment communicating with the inlet and the first outlet and a second environment communicating with the second outlet,
- a tank able to receive and store the separated solid fraction and accumulated in the first environment of the filter chamber, so as to keep the separated solid fraction separated from the fluid to be filtered and from the filtered fluid fraction and
- a recycling group configured so as to collect at least a portion of the solid fraction stored in the tank and re-inject the portion of collected solid fraction successively in the first environment of the filter chamber.

With this solution, the plant is particularly flexible as it is able to filter various types of products having different characteristics of solid concentration and viscosity.

Further, with this solution, it is possible to increase the production capacity of the filter group, reducing dead times (due to necessary washing) and optimising the work steps so as to obtain the desired filtration performance efficiently.

A further aspect of the invention, with the aims as outlined above, relates to a method for separating a solid fraction of a fluid containing the solid fraction, comprising steps of:
**a)** supplying a filter group provided with a filter wall with a quantity of fluid;
**b)** filtering the fluid, by means of the filter wall, so as to separate the solid fraction from the filtered fluid fraction;
**c)** monitoring at least a parameter indicating a concentration of the solid fraction present in the filter group;
**d)** discharging from a first environment of the filter group, located upstream of the filter wall in the crossing direction of the fluid, a part of the solid fraction separated from the filtered fluid fraction into a tank, when the monitored parameter is greater than or equal to a determined first threshold value thereof;
**e)** re-injecting thereafter at least a portion of the solid fraction stored in the tank into the first environment for further filtration thereof; and
**f)** discharging from the first environment the solid fraction separated from the filtered fluid, when the monitored parameter is greater than or equal to a second threshold value thereof, for example greater than the first threshold value.

With this solution it is possible to obtain longer filtration cycles, with respect to those obtainable with traditional dynamic filters before having to wash the filter and to reset the initial conditions of the filter, further enabling at the same time filtration of greater volumes of product.

In practice, it is possible to prolong as much as possible the most efficient step of the filtration, i.e. the initial step in which the concentration of the solid fraction is lower than or equal to the first threshold value and then delaying and concentrating at a later time the spending (i.e. the total pressing) of the retentate (up to reaching the second concentration threshold value) for completing the filtration thereof in the most rational way and having already obtained a good quantity of clarified fluid fraction. Further, with this solution it is possible to maintain a filtration flow, i.e. a flow rate of the filtered fluid fraction, that is substantially constant for the majority of the filtration cycle, reducing to a minimum the times for complete exhaustion of the retentate (i.e. the reaching of the second threshold value of the monitored parameter) and discharge of the spent retentate (i.e. brought to the second threshold value). Additionally, the filtration waste (spent retentate) can therefore have a very high solids content (for example with solid content > 85 %v/v determined by centrifugation at 6000 rpm). Again, with this solution the filtration steps take place without interrupting the filtration flow rate of the permeate, i.e. of the filtered fluid fraction, during each of the steps.

Also, in an entirely independent way, the invention might relate to a separating group of a solid fraction from a fluid containing the solid fraction which comprises a filter group comprising at least a filter chamber associated to an inlet for the fluid to be filtered, at least a first outlet for the solid fraction separated from the fluid to be filtered and to a second outlet for a filtered fluid fraction, at least a filter wall located in the filter chamber so as to subdivide the internal volume thereof into two environments, of which a first environment communicating with the first inlet and a second environment communicating with the second outlet; at least a shaker element located in the first environment and configured such as to create a turbulent motion in the fluid to be filtered, and an outflow pump associated to the second outlet configured such as to determine a depression in the second environment.

### BRIEF DESCRIPTION OF THE DRAWINGS

Further characteristics and advantages of the invention will emerge from a reading of the following description, provided by way of non-limiting example with the aid of the figures illustrated in the appended tables of drawings.

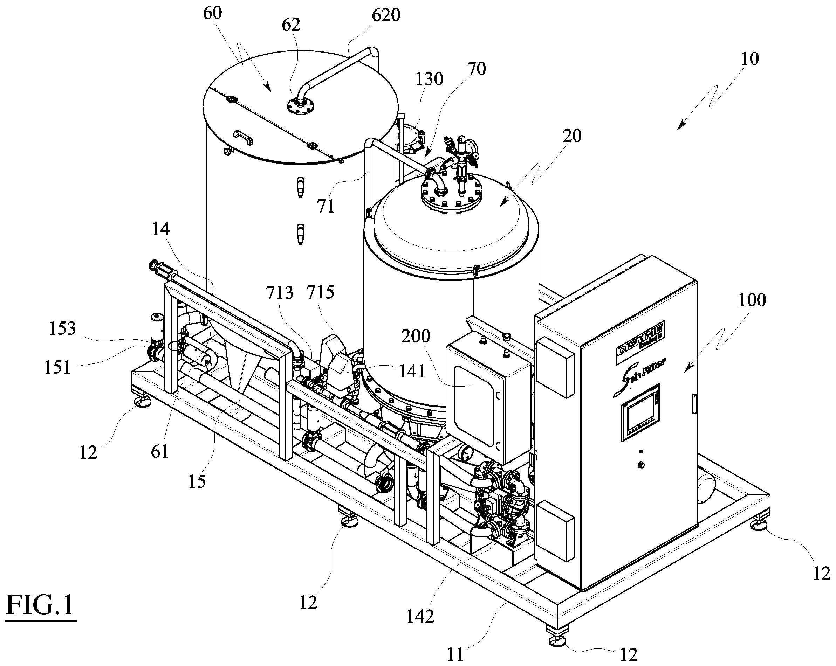

Figure 1 is an axonometric view from the left of a separating group according to the invention.

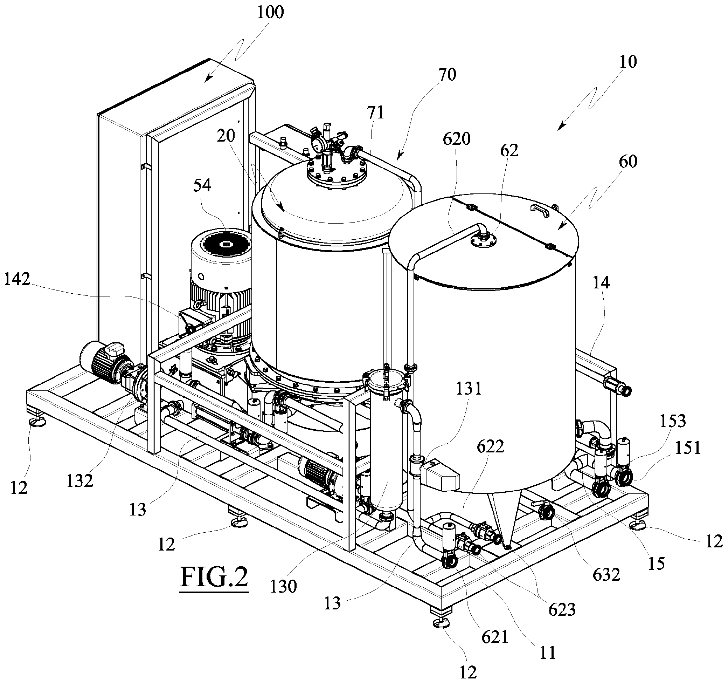

Figure 2 is an axonometric view from the right of figure 1.

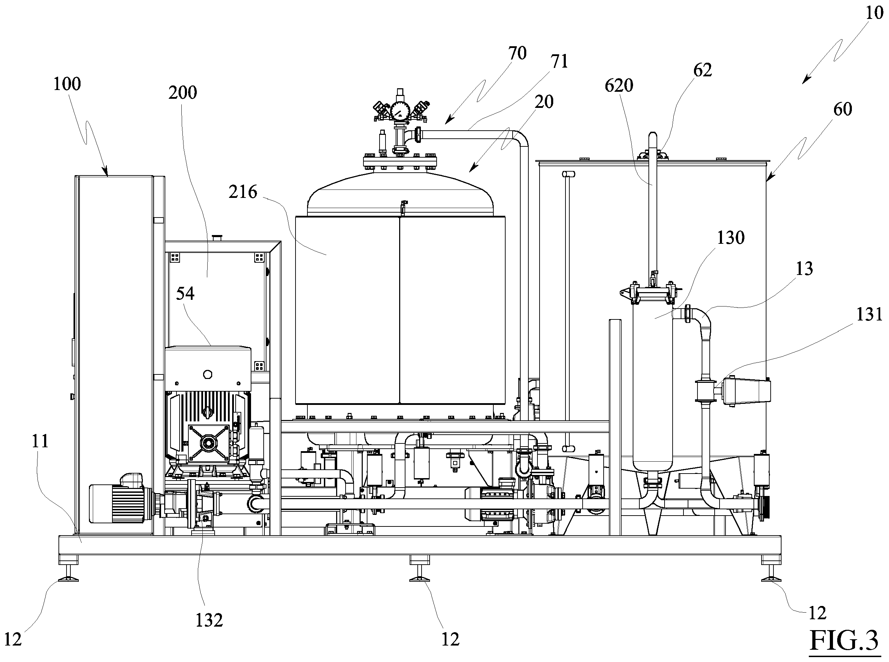

Figure 3 is a lateral view from the left of figure 2.

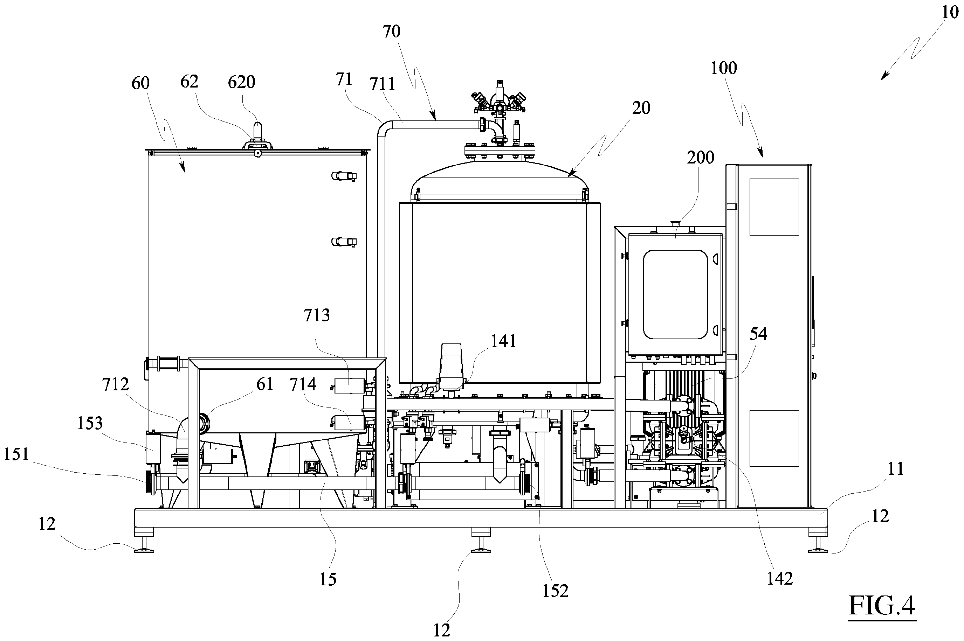

Figure 4 is a lateral view from the left of figure 1.

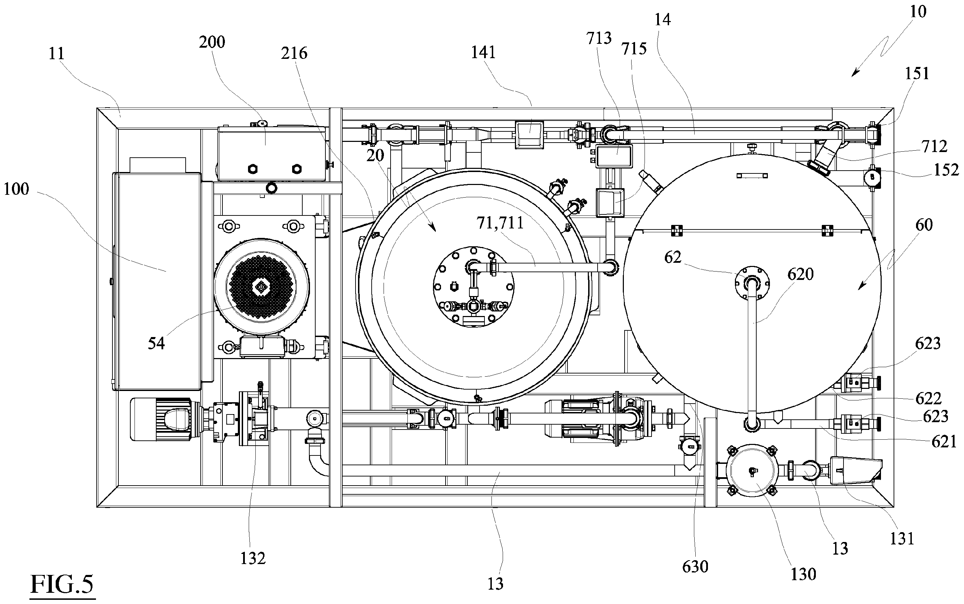

Figure 5 is a view from above of figure 2.

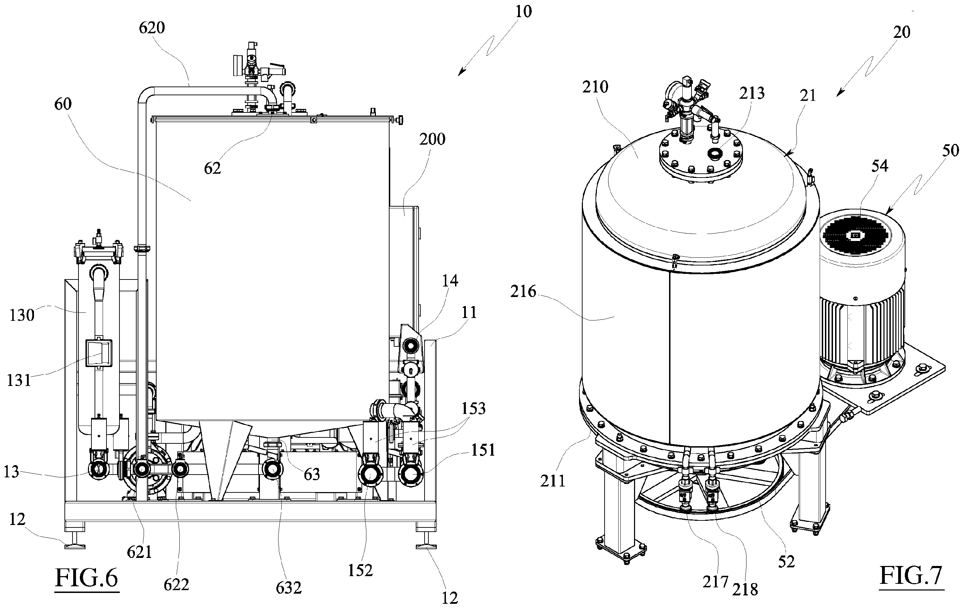

Figure 6 is a frontal view of figure 2.
Figure 7 is an axonometric view of a filter group of the separating group according to the invention.
Figure 8 is a lateral view of figure 7.
Figure 9 is a frontal view of figure 7.

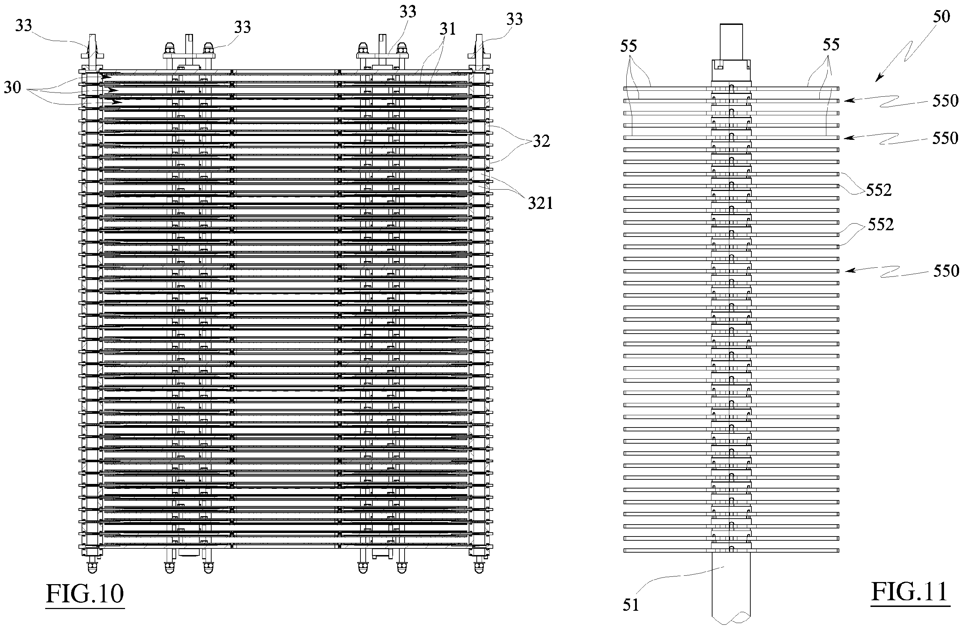

Figure 10 is a section view with respect to a central vertical plane of a stack of filtration chambers of the filter group of figures 7-9.
Figure 11 is a lateral view of a shaker element of the filter group of figures 7-9.

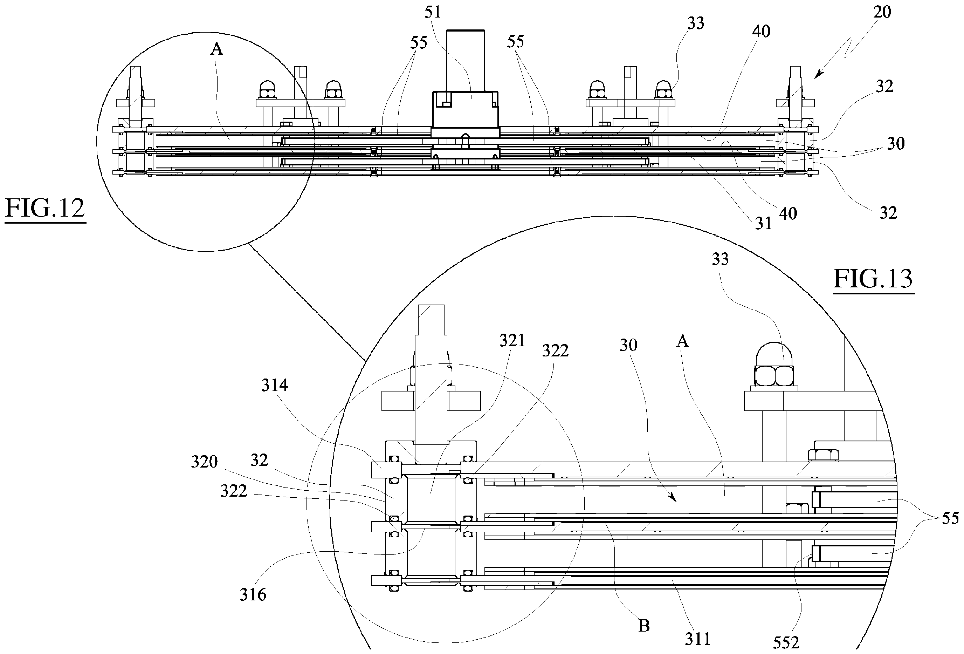

Figure 12 is a view of a detail of some of the filtration chambers of figure 10 with the shaker element inserted therein.
Figure 13 is an enlarged detail of figure 12.

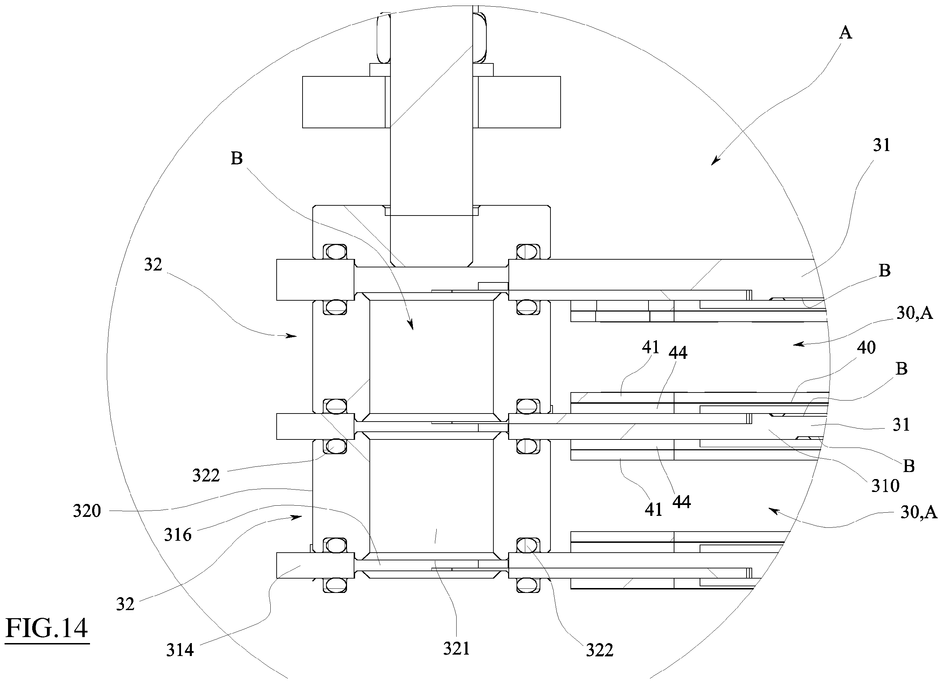

Figure 14 is a significantly enlarged detail of figure 13.

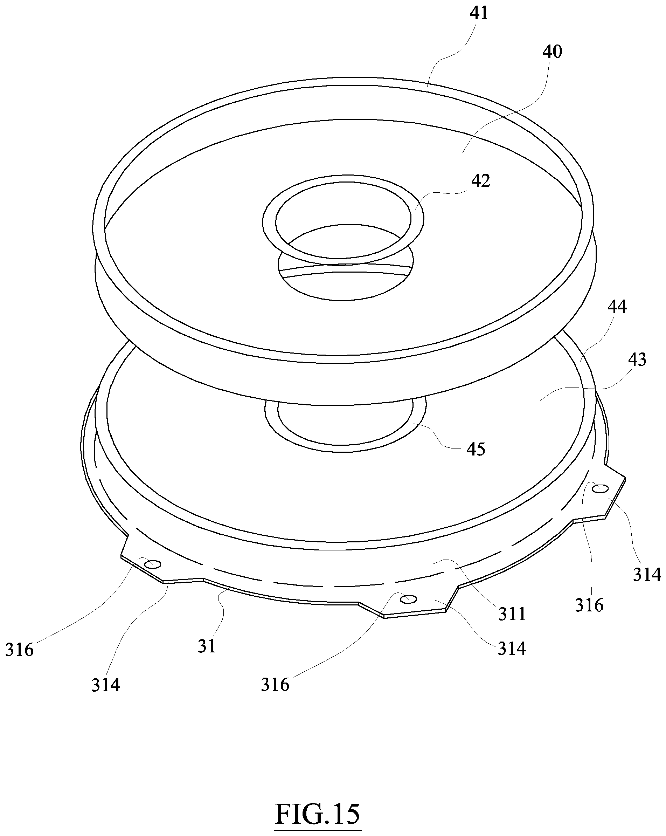

Figure 15 is an exploded view of a disc-shaped body and a filter wall defining a filtration chamber of the filter group according to the invention.

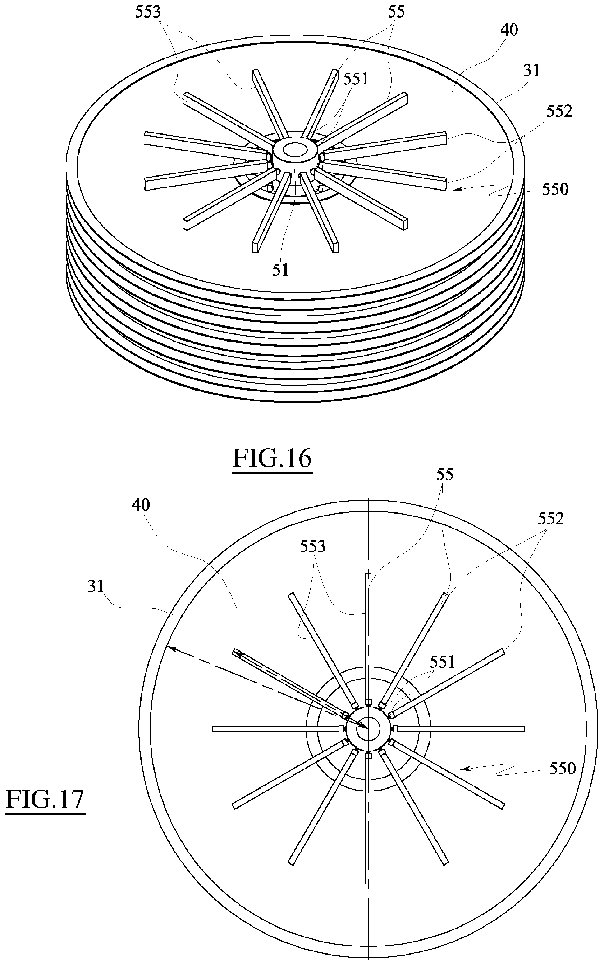

Figure 16 is an axonometric view of a detail of some filtration chambers inserted in the filter group from which the bell-shaped body has been removed for a more detailed view of the stack of filtration chambers.
Figure 17 is a view from above of figure 16.
Figure 18 is a hydraulic diagram of the separating group according to the invention.

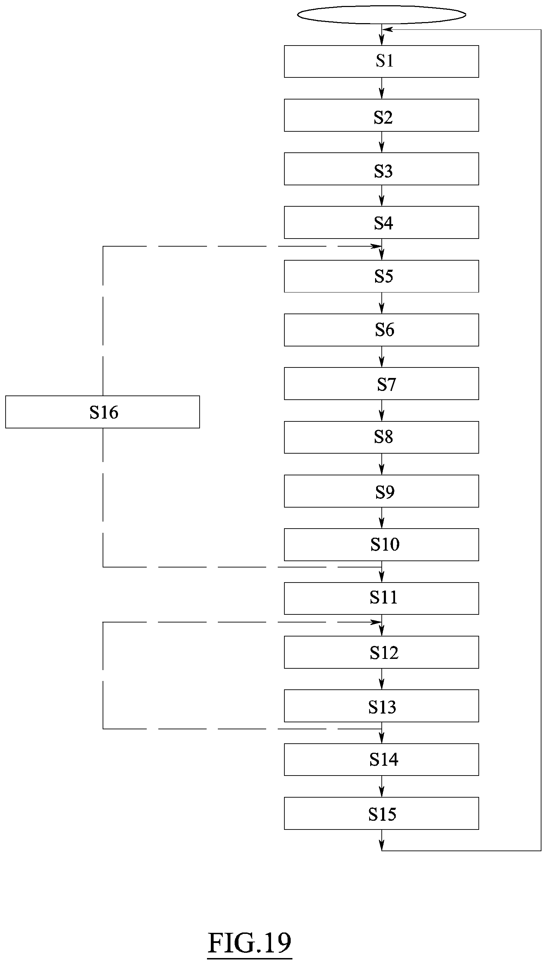

Figure 19 is a representative diagram of the steps of the filtration cycle which can be carried out by the filter group of the invention.

### BEST WAY OF CARRYING OUT THE INVENTION

With particular reference to the figures, the separating group denotes in its entirety a separating group of a solid fraction of a fluid containing the solid fraction.

The separating group 10 comprises a support frame 11 provided with conventional ground rests 12.

The separating group 10 comprises a filter group 20, which, for example, is supported by the support frame 11.

The filter group 20 is for example of a dynamic type, i.e. a filter group in which fluid to be filtered flows parallel to the filter means and in relative motion such as to create turbulence in the flow of the fluid to be filtered. These dynamic-type filtration groups, which were introduced as an evolution of the tangential filters, are based on the principle of using flat filtration membranes stacked and distanced from one another internally of one or more filtration chambers and "generating" a "sufficient turbulence" precisely in proximity of the filter membrane. The term "sufficient turbulence" is taken to mean a turbulence able to prevent or delay the overflowing of the filter membrane and which is realised either by rotating the filter means or using smooth or profiled rotating discs which rotate at high speed and in proximity of the filter membrane, but without touching the surface or vibrating the filter means at high speed.

The filter group 20 comprises an external casing 21 provided with a bell-shaped body 210 with a concavity facing downwards, sealedly closed (inferiorly) by a cover 211.

The cover 211 and the bell-shaped body 210, as shown in the figures, are provided with respective annular fixing flanges able to come into contact and be reciprocally fixed by means of a plurality of bolts.

The casing 21 comprises un inlet 212, for example an inlet mouth defined on the bottom of the cover 211.

The casing 21 comprises, further, at least a first outlet 213, for example an outlet mouth defined on the top wall of the bell-shaped body 210, from which the solid fraction separated from the fluid to be filtered can exit.

The casing 21 further comprises a second outlet 214, for example an outlet mouth defined on the bottom of the cover 211, from which the fraction of filtered fluid can exit.

The casing 21 further comprises a third outlet 215, from which the solid fraction separated from the fluid to be filtered can exit.

The casing 21, i.e. the bell-shaped body 210 thereof, can comprise an insulated cope 216 which comprises internally thereof a hydraulic circuit (not shown) in which a thermal fluid circulates, which circuit comprises an entry conduit 217 and an exit conduit 218 opening externally of the insulating cope 216 and connectable to a pumping group (not illustrated) of the work fluid. The filter group 20 further comprises a filter chamber 30 defined internally of the casing 21.

In the example the filter group 20 comprises a plurality of filter chambers 30, stacked on one another vertically, internally of the casing 21 in fact substantially connected in parallel.

Each filter chamber 30 comprises at least a rigid disc-shaped body 31, provided with a central hole.

Each disc-shaped body 31 comprises a central part 311 and one or more lugs 314 directed radially externally. A through-hole 316 is made at each lug 314, and a cavity which places the hole 316 in communication with the central cavity 311.

Each filter chamber 30 is defined by a pair of disc-shaped bodies 31 axially superposed on one another (in plan view) and maintained at a distance by at least a spacer element 32, so that the upper face of the disc-shaped body 31 located inferiorly is facing the lower fact of the disc-shaped body 31 located superiorly, and, for example, in such a way that the through-hole 316 of each lug 314 of the disc-shaped body 31 located inferiorly is axially aligned (vertically) with a through-hole 316 of each lug 314 of the disc-shaped body 31 located superiorly.

In the example, each filter chamber 30 comprises a plurality of spacer elements 32, in the example six in number.

Each spacer element 32 comprises a spacer shank 320 provided with a central through-cavity 321 from side to side, parallel to the axis of the disc-shaped body 31.

Each disc-shaped element 32 further comprises a pair of seal rings 322, of which an upper and a lower seal ring 322, each fixed in an annular seating defined in the opposite axial faces of the spacer shank 320 and able to surround a respective open end of the central cavity 321.

It is however possible for an axial face of the spacer shank 320 to be fixed to the relative disc-shaped body 31, for example by means of screws or another fixing system.

Each spacer element 32 can be interposed between two superposed lugs 314 of the disc-shaped bodies 31, so that by keeping the disc-shaped bodies 31 at a distance, the central cavity 321 of the spacer shank 320 places the aligned through-holes 316 in sealed communication (i.e. it is axially aligned with them).

The stack of filter chambers 30, as defined above, are fixed to one another by suitable tie-rods 33.

The filter group 20 further comprises at least a filter wall 40, for example a filter wall that is flat and disc-shaped and provided with a central hole of substantially the same diameter as the central hole of the disc-shaped body 31.

The filter wall 40 is for example a flat membrane, for example polymeric.

In the example the filter group 20 comprises a plurality di filter walls 40, for example 2 for each filter chamber 30.

Each filter wall 40 has an external diameter substantially equal to the external diameter of the disc-shaped body 31, i.e. a little larger than the external diameter of the central zone 311 thereof.

Each filter wall 40 is able to be coaxially fixed to a disc-shaped body 31, for example at each face thereof (with the exception of the first and last disc-shaped body 31 of the stack, which has a single filter wall 40 fixed thereto).

In practice, each filter wall 40 can be fixed to the respective disc-shaped body 31 at the external and internal periphery thereof, for example by means of an external blocking seal ring 41 and an internal blocking seal ring 42. Each external blocking seal ring 41 and internal blocking seal ring 42 is screwed, by means of a plurality of screws, to the disc-shaped body 31 so that between the internal blocking seal ring 42 and the external blocking seal ring 41 the filter wall 40 defines an active portion in filtration superposed on the central part 311 of the disc-shaped body 31.

The external blocking seal ring 41 is preferably fixed at the external peripheral crown of the disc-shaped element 31.

A cloth filter 43, also disc-shaped, can be interposed between the filter wall 40 and the disc-shaped body 31, in particular between the active portion in filtration of the filter wall 40 and the central part 311 of the for example disc-shaped body 31.

Further, an external seal ring 44 and an internal seal ring 45 can be clamped between the disc-shaped body 31 and, respectively, the external blocking seal ring 41 and the internal blocking seal ring 42.

In practice, each filter wall 40 is located in the filter chamber 30 so as to subdivide the internal volume into two separate environments communicating exclusively through the meshes of the filter wall, of which a first environment A located upstream of each filter wall 40 in the crossing direction of the fluid, which is in communication with the inlet 212, the first outlet 213 and each third outlet 215, and a second environment B, located downstream of each filter wall 40 in the crossing direction of the fluid, which is in communication exclusively with the second outlet 214.

In practice, the internal volume of the casing 21 is subdivided by the plurality of filter wall 40, into:
- a plurality of second environments B, each defined by the gap interposed between each filter wall 40 and the disc-shaped body 31 to which it is fixed and each communicating with the second outlet 214 via drainage channels defined by the stacks of through-holes 316 and central cavities 321 of the spacer bodies 320; and
- a first environment A defined by the whole internal volume of the casing minus the second environments B defined above, i.e. defined by the plurality of interspaces between the filter walls 40 of each filter chamber 30 and the remaining volume internal of the casing 21, and external of the stack of filter chambers 30.

The filter group 20 further comprises at least a shaker element 50 that can be arranged in the first environment A, so as to determine, for example, a turbulent motion (or in any case a shaking) in the fluid being filtered (and the relative solid fraction) present in the first environment A.

In the example, the shaker element 50 comprises a rotating shaft 51 located coaxially internally of the stack of filter chambers 30, for example with abundant radial play internally of the central hole of the disc-shaped bodies 31 and the filter walls 40.

An end (lower in the figure) of the rotating shaft 51 projects out of the casing 21 and is connected, by means of an appropriate transmission 52, for example a belt transmission 52, to the drive shaft 53 of a motor 54, for example, supported by the support frame 11.

The rotation velocity of the rotating shaft 51 can be substantially comprised between 150 and 500 rpm.

The rotating shaft 51 supports a group 550 of radial blades 55, each of which can be arranged in one of the interspaces between the filter walls 40 of each filter chamber 30, for example equidistant axially from the (two) filter walls 40 of the filter chamber 30.

Each blade 55 is located in proximity of at least a respective filter wall 40, without there being any contact between the surface of the filter wall 40 and the blade 55 itself.

In the example, the shaker element 50 comprises a plurality of groups 550 of blades 55, wherein the blades 55 of each group 550 are substantially coplanar, i.e. they lie on a same plane perpendicular to the axis of the rotating shaft 51.

Each group 550 of blades 55 can be inserted in a filter chamber 30, so that the blades 55 of the group 550 of blades 55 are axially interposed between the filter walls 40, upper and lower, of the filter chamber.

In practice, the rotation of the blades 55 internally of the interspace defined between the two filter walls 40 of the filter chamber 30 causes a turbulent motion in the fluid to be filtered present therein, which facilitates filtration thereof.

Further, the rotation of the blades 55 causes a centrifugal thrust on the fluid being filtered which enables a cleaning of the fouled side of the filter wall 40, increasing the filtration efficiency thereof.

For example, each group 550 of blades 55 comprises (is constituted by) from three to twelve, preferably twelve, blades 55 (radial and equidistant).

Each blade 55 of the group 550 of blades 55 has a first end 551 constrained to the rotating shaft 51 and a free second end 552.

The second end 552 of each blade 55 is at a distance from the rotation axis (i.e. has a length) substantially comprised between 5/10 and 8/10, preferably 7/10, of the external radius of the filter wall 40, i.e. the external radius of the active portion of the filter wall 40 (which projects internally from the external blocking seal ring 41).

In practice, the length of each blade 55 is shorter than the external diameter of the disc-shaped body 31, i.e. is substantially comprised between 5/10 and 8/10, preferably 7/10.

In practice, each blade 55 rotates parallel to the filter walls 40 (and is distanced therefrom) brushing a radial portion, i.e. the internal radial portion, of the surface facing towards the first environment A.

Each blade 55 can also have a tapered profile in a circumferential direction which goes from the first end 551 towards the second end 552, in practice the second free end 552 has a width (circumferential) that is smaller than the first end 551, while maintaining, for example, the same thickness (with respect to the rotation axis).

Further, each blade 55 has a lateral face 553, for example the front face (in the rotation direction of the blade) or both, perpendicular to the filter wall 40, i.e. to the lie plane of the filter wall 40 itself, which is configured to push, in a radial direction, the fluid being filtered or push the fluid in the first environment A. In practice, the blade 55 is a radial blade i.e. it pushes the fluid in a radial direction with respect to the rotation thereof.

The ratio between the height of the blade 55 along the parallel direction to the rotation axis thereof and the height in the direction of the filtration chamber 30 is substantially comprised between 2/10 and 7/10, preferably 4/10.

The separating group 10 comprises an inflow conduit 13 of the filter fluid, which has an end connected to the inlet 212 of the filter group 20 and a free end connectable to a supply group (not illustrated) of the fluid to be filtered. A pre-filter 130 can be positioned on the inflow conduit 13, for example a bag filter, able to intercept the fluid to be filtered for a first refining of the largest solid fraction contained therein.

Further a first flow rate meter 131 can be positioned on the inflow conduit 13. Further, a supply pump 132 of the fluid to be filtered is positioned on the inflow conduit 13, configured so as to send the fluid to be filtered under pressure towards the inlet 212 and therefore internally of the casing 21 of the filter group 20.

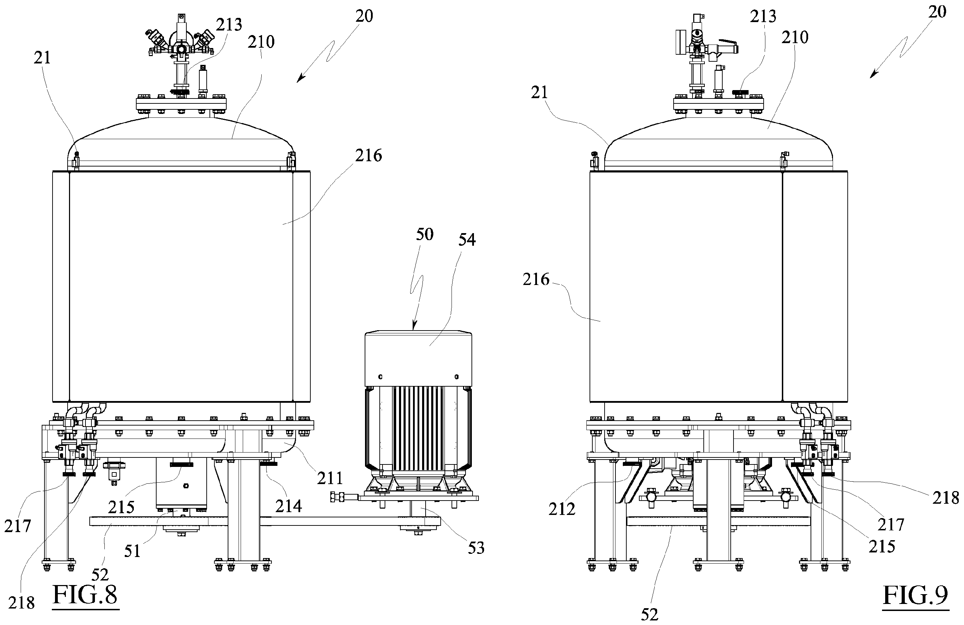

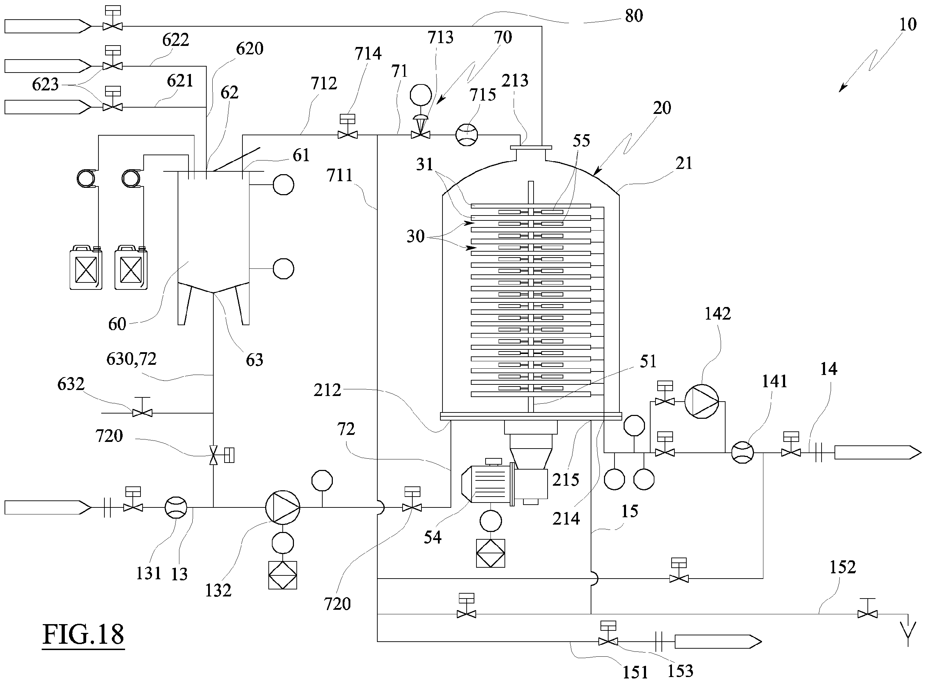

The separating group 10 comprises an outflow conduit 14 of the fluid fraction filtered by the filter group 20, which has an end connected to the second outlet 214 (figures 8 and 18) of the filter group 20 and a free end connectable to a storage and/or use group (not illustrated) of the filtered liquid fraction. Further a second flow rate meter 141 can be positioned on the inflow conduit 14.

Further, an outflow pump 142 can be arranged on the outlet conduit 14, for example a vacuum pump, which is configured for aspirating the filtered liquid fraction present in the second environment B and, via the outlet conduit 14, send it to a storage and/or use group (not illustrated) of the filtered liquid fraction.

The outflow pump 142 has the double function of:
- enabling a constant depression in the outlet conduit 14 and therefore in all the second environment B, so as to enable the filter wall 40 to remain always adhering to the disc-shaped body 31 to which it is fixed, without being able to rise and risk going into contact with the rotating blades 55, even when a storage tank of the separated liquid fraction is positioned at a higher level than the height at which the filter group 20 is positioned; and
- removing any air or gas bubbles which might be trapped by the filter wall 40, which is often very permeable to liquids but impermeable to gases, in the second environment B, which by accumulating below the filter wall 40 risk producing a detachment/inflation of the filter wall 40 itself from the relative disc-shaped body 31.

The separating group 10 further comprises an outflow conduit 15 connected to the third outlet 215 which has a first end 151 connected to a storage and/or elimination and/or re-use group (not illustrated) of the fluid being filtered in the filter group 20.

For example, the outlet conduit 15 is forked and exhibits a second free end 152, generally closed by a cap or tap, which is manually openable for manual discharge of the solid fraction separated from the fluid under filtration in the filter group 20, for example in a case of an emergency.

At the branch of the outlet conduit 15 provided with the first free end 151 there is a first opening and closing valve 153 of the first end 151.

The separating group 10 further comprises a filter group 60, which, for example, is supported by the support frame 20, for example by a flank of the filter group 20.

The tank 60 comprises a tub body having a concavity facing upwards, for example superiorly closed by a hatch door, for example inspectable, and a volume comprised between 5/10 and 25/10 of the internal volume of the casing 21.

For example, the tank 60 might comprise an insulating/refrigerating cope (not illustrated), which internally comprises a hydraulic circuit in which the thermal fluid circulates.

The tank 60 comprises a first inlet 61, for example made at a bottom portion thereof, and a second inlet 62, preferably realised in a top portion thereof, for example at the hatch door.

The tank 60 comprises an outlet 63, for example realised on the bottom of the tank, for example at the lowest point thereof.

The tank 60 is connected, by means of the second inlet 62, to an entry pipeline 620 of a washing fluid, for example water, which will fill the tank 60. In practice, the entry pipeline 620 is connectable to a water supply network. In particular, the entry pipeline 620 comprises a first branch 621 connectable to a cold water supply and a second branch 622 connectable to a supply network of hot water, for example each branch 621, 622 is intercepted by an appropriate selector valve 623.

The outlet 63 of the tank 60 is connected to an exit pipeline 630, which in turn is connected to the inlet 212 of the filter group 20.

A sourcing pump can be positioned on the exit pipeline 630, configured to detect a fluid present in the tank 60 and send it, via the exit pipeline 630, toward the inlet 212 of the filter group 20 and therefore internally of the first environment A of the casing 21.

In the example the sourcing pump is defined by the supply pump 132.

In practice, the exit pipeline 630 enters the inflow conduit 13 upstream of the supply pump 132, in the crossing direction of the fluid along the inflow conduit 13 imparted by the supply pump 132 itself (for example downstream of the first flow rate meter 131).

The exit pipeline 630 can also comprise a discharge branch (not illustrated) that is openable for emptying the tank 60.

The separating group 10 further comprises a recycling group 70 able to recycle a portion of the solid fraction between the filter group 20, in particular the first environment A into which the casing 21 thereof is subdivided, and the tank 60.

The recycling group 70 comprises in the example at least a first recycling conduit 71 connected to the first outlet 213 of the filter group 20 and to the first inlet 61 of the tank 60.

The first recycling conduit 71 is for example forked and places the first outlet 213 selectively in communication with the outlet conduit 15 (for example the first end 151 thereof) or the first inlet 61 of the tank 60.

The first recycling conduit 71 is defined, for example, by a first portion 711, and end of which is connected to the first outlet 213 and the second end of which enters the first outlet conduit 15 (in an intermediate portion thereof between the first end 151 and the second end 152), and by a second portion 712 an end of which (upstream) is connected to the entry point of the first portion 711 into the first outlet conduit 15 (in practice defining a branch at that point) and the other (downstream) end is connected to the first inlet 61 of the tank 60.

A modulating valve 713 is present on the first recycling conduit 71 (upstream of the branch with the second portion 712), i.e. on the first portion 711 thereof, i.e. a valve for regulating the passage opening for regulating the fluid flow rate crossing it.

A second opening and closing valve 714 is located on the first recycling conduit 71, i.e. on the second portion 712 thereof, able to selectively open/close the second portion 712.

Further, a third flow rate meter 715 is present on the first recycling conduit 71, i.e. on the first portion 711 thereof.

The recycling group 70 comprises a second recycling conduit 72 connected to the tank 60 and to the inlet 212 of the filter group 20 for sending the solid fraction present in the tank 60 towards the inlet 212 of the filter group 20, i.e. internally of the first environment A into which the internal volume of the casing 21 is subdivided by the filter walls 40.

In practice, the second recycling conduit 72 is defined by a first portion of the exit pipeline 630 connected to the outlet 63 of the tank 60 and which enters the inlet conduit 13 (upstream of the supply pump 132) and by a second portion which is defined by the portion of inlet conduit 13 containing the supply pump 132 and which connects to the inlet 212.

Selector valves 720 are located on the first and on the second portion, which are configured for opening and closing the second recycling conduit 72 i.e. for selectively opening or closing the exit pipeline 630 or the inflow conduit 13.

The exit pipeline 630 can exhibit a further open end 632 provided with a tap, for example manual, for manual discharge.

The tank 60 might comprise one or more level sensors, and the filter group 20 and/or tank 60 might further comprise one or more sensors able to detect the density at least of the solid fraction separated from the fluid being filtered. The separating group 10 further comprises a control and command unit 100, which is operatively connected to the filter group 20, and/or to the supply pump 132, and/or to the flow rate meters 131, 141, 715 (and/or to the various level and/or density sensors), and/or to the outflow pump 142, the opening and closing valves 153, 714, and/or the motor 54, and/or the selector valve 623, and/or the selector valves 720 and/or other valves, for example evacuating valves, so as to be able to control and command the activating and halting of the activation, as will be more fully described in the following. The separating group 10 might also comprise a pneumatic switchboard 200 able to manage the pneumatic operation, electrically actuated, of the above-described valves.

The control and command unit 100 is configured for commanding and controlling the following functioning steps of the separating group according to a filtration cycle as described in the following.

Firstly the control and command unit 100 commands the supply (block S1) of a first quantity of fluid to be filtered to the filter group 20.

In practice, the control and command unit 100 commands the activation of the supply pump 132 so as to supply the fluid to be filtered along the inflow conduit 13 and into the casing 21 through the inlet 212.

In practice, first a first portion of the first quantity of fluid supplied internally of the casing 21 is such as to fill the internal volume of the casing 21, i.e. the whole volume of the first environment A.

Once the casing 21, i.e. the first environment A, is filled and the fluid contained therein is subjected to a substantially greater pressure of a predetermined threshold value, the filter group 20 begins filtering (block S2) the fluid present in the first environment A, by means of the filter walls 40, each of which can be crossed by the liquid fraction of the fluid to be filtered, so as to separate the solid fraction, which remains in the first environment A, from the fraction of filtered fluid, which passes into the second environment B.

The control and command unit 100 is at the same time configured such as to actuate (block S2) the outflow pump 142, which discharges the liquid fraction separated from the fluid being filtered from the second environment B.

The activating of the outflow pump 142 might not be necessary, as the pressure internal of the first environment A is sufficient to guarantee the outflow of the fraction of filtered liquid for discharge thereof in a dedicated tank.

In a case where however the dedicated tank were at a higher level than the level of the casing 21, the atmospheric pressure acting on the free surface of the filtered fluid in the dedicated tank might exert a return thrust on the filtered fluid which would translate into an overpressure in the second environment B, such as not to guarantee adherence between the disc-shaped body 31 and the filter wall 40.

Therefore, the outflow pump 142 in fact guarantees that there is always a depression in the second environment B that is such as to keep the disc-shaped body 31 adhering to the filter wall 40.

During this step the control and command unit 100 is configured to continue (block S2) the supply of fluid to be filtered into the casing 21.

In practice, the supply pump 132 is maintained activated so that in the first environment A contained internally of the casing 21 a constant pressure is maintained, for example equal to the threshold pressure value.

Once the first environment A has reached a pressure value equal to the threshold pressure, the control and command unit 100 (block S3) commands the activating of the shaker element 50, i.e. the rotation of the groups 550 of blades 55, by activation of the motor 54.

The control and command unit 100 is configured such as to monitor at least an indicative parameter of the concentration reached by the product contained in the first environment A of the filter group 20 (block S3). For example the monitored parameter is derived from the ratio between the volume of the fraction of filtered liquid and the volume of fluid supplied in the first environment A of the filter group 20, for example measured by the flow rate meters 141 and 131.

Alternatively, as a parameter indicating the concentration in solids of the fluid contained in the first environment A, monitoring can be done of either the conductivity of the fluid contained in the first environment A or the instantaneous absorption of the motor 54 which rotates the shaker element 50 or a combination of the parameters.

When the above-mentioned parameter is equal to or greater than a first predetermined threshold value, according to the type of fluid filtered, the control and command unit 100 (block S4) is configured to open the second opening and closing valve 714 (keeping the first opening and closing valve 153 closed) and the modulating valve 713, so that a portion of the solid fraction present in the first environment A of the casing 21 is transferred, via the first recycling conduit 71, into the tank 60.

While the second opening and closing valve 714 is open, the control and command unit 100 is configured such as to command the supply pump 132 to continue supply of the fluid to be filtered, so as to supply into the casing 21 a second quantity of fluid to be filtered (block S5); in practice, the control and command unit 100 regulates both the rotation velocity of the supply pump 132 and the opening of the modulating valve 713, such that the value of the fluid pressure contained in the first environment A of the casing 21 and the value of the monitored parameter remain substantially constant over time (during the block S5).

During this step, the outflow pump 142 (and/or the natural discharge of the liquid fraction) is further maintained in action, so as to continue to discharge the liquid fraction which gradually separates from the fluid being filtered and collects in the second environment B.

Further, the motor 54 is maintained in action, so as to maintain the turbulence of the fluid (with the solid fraction) present in the first environment A.

On reaching a predetermined volumetric filling threshold value of the tank 60 (block S6), for example on reaching its maximum capacity, the control and command unit 100 is configured so as to interrupt supply of the fluid to be filtered to the filter group 20.

At the same time, the control and command unit 100 is configured to close the second opening and closing valve 714 and the modulating valve 713, so as to interrupt the flow of the solid fraction from the first environment A of the casing 21, via the first recycling conduit 71, towards the tank 60.

The control and command unit 100 is further configured to re-inject (block S7) the solid fraction into the first environment A of the filter group 20, or at least a portion thereof or all thereof, which is present in the tank 60 for the further filtration thereof, so that the fluid pressure contained in the first environment A of the casing 21 remains constant over time (during the block S7).

In practice, the control and command unit 100 (by commanding the selective opening and closing of the selection vales 720) is configured for actuating the supply pump 132 (which in practice is maintained functioning), so that the solid fraction present in the tank 60 is collected therefrom and, via the second recycling conduit 72, is re-injected into the first environment A of the casing 21.

In practice, the inlet conduit 13 is closed upstream of the first flow rate meter 131 and the selection valve 720 located in the exit pipeline 630 is opened, so that the supply pump 132 sources from the tank 60 and sends the solid fraction present therein towards the internal volume of the tank 21, through the inlet 212.

In practice, the solid fraction (at least a portion thereof) initially located in the tank 60 is once more forced to pass into the first environment A, which portion will newly be filtered so as to separate therefrom a further amount of liquid fraction which might still be present therein.

During the step of re-injection (or recycling) of the solid fraction present in the tank 60 in the first environment A, the outflow pump 142 (for example) is maintained in action, so as to discharge the liquid fraction which gradually collects in the second environment B.

Further, the motor 54 is maintained in action, so as to maintain the turbulence of the fluid (with the solid fraction) present in the first environment A.

The step of re-injecting (or recycling) (block S7) of the solid fraction present in the tank 60 in the first environment A is interrupted when the monitored parameter indicating the concentration attained by the fluid contained in the first environment A of the filter group 20 reaches a value of equal to or greater than a second predetermined threshold value (of the concentration), for example greater than the first threshold value and determined according to the type of fluid filtered (block S8).

When the above-mentioned parameter is equal to or greater than the second predetermined threshold value, the control and command unit 100 (block S4) is configured to open the first opening and closing valve 153 (keeping the second opening and closing valve 714 closed) and the modulating valve 713, so as to discharge a portion of the solid fraction (having a concentration substantially equal to the second threshold value mentioned in the foregoing) present in the first environment A (block S9).

While the first opening and closing valve 153 and the modulating valve 713 are open, the control and command unit 100 is configured to command the supply pump 132 to continue sourcing the pre-separated solid fraction stored in the tank 60, so as to supply into the first environment A of the filter group 20 the solid fraction to be further filtered.

In practice, the control and command unit 100 regulates both the rotation velocity of the supply pump 132 and the opening of the modulating valve 713, such that the value of the fluid pressure contained in the first environment A and the value of the monitored parameter remain substantially constant over time (i.e. so that the concentration of the fluid in the first environment A is substantially equal to the second threshold value).

On reaching a predetermined volumetric emptying threshold value of the tank 60 (block S10), for example on reaching its minimum capacity (for example with the tank 60 empty), the control and command unit 100 is configured so as to interrupt supply of the fluid to be filtered (i.e. the pre-separated solid fraction stored in the tank 60) to the filter group 60 from the tank 60.

At this point in the process, the casing 21 is full, the shaker element 50 is maintained in operation and a very dense solid fraction is present in the first environment A (i.e. with the monitored parameter equal to the second threshold value); further, the tank 60 is substantially empty.

At this point, in order to be able to reiterate the filtration process without emptying the filter group 20 it is possible, when the parameter indicating the fluid concentration in the casing 21 is substantially equal to the second predetermined threshold value, for the control and command unit 100 to command (block S16):
- the opening of the modulating valve 713 and the second opening and closing valve 714 so as to discharge a part of the solid fraction (very dense) present in the first environment A in the tank 60 and, at the same time,
- the activating of the supply pump 132 (and advantageously the selector valves 720) so as to introduce fluid (fresh) to be filtered, sourced via the inflow conduit 13 by the supply group (not illustrated) of the fluid to be filtered, in the first environment A, in effect diluting the concentration of the fluid present in the first environment A up to reaching a value of the indicative monitored parameter (for example the concentration of the fluid) close (or just above) the first predetermined threshold value.

At this point the above-described operating steps of blocks from S5 to S10 can be repeated.

This further cycle can be repeated a determined number of times, up to when the filter walls 40 require a wash (due to partial clogging or limited filtration capacity).

Thereafter the control and command unit 100 is configured so as to command (block 11) the total discharge of the casing 21 from the solid fraction and the residual fluid contained therein.

In practice, the control and command unit 100 is configured so as to open evacuation valves, up to complete emptying of the casing (first environment A).

To facilitate total discharge from the casing 21, the casing 21 can be connected to a gas piping 80, for example nitrogen, which supplies pressurised gas internally of the casing 21 so as to push the solid fraction present out (for example from the first environment A).

The control and command unit 100 is configured such as to start (block S12) a rinsing cycle of the filter group 20 with a rinsing fluid, for example hot and/or cold water.

In practice, the rinsing cycle includes filling the tank 60 with rinsing liquid, by opening one or both the selector valves 623.

When the tank 60 is full of rinsing liquid (up to a predetermined level, for example equal to the maximum capacity thereof), the rinsing cycle includes activating the supply pump 132 or the sourcing pump, so as to transfer the rinsing liquid from the tank 60 to the first environment A of the casing 21. Further, during the rinsing cycle, the control and command unit 100 can be configured so as to activate the shaker element 50, i.e. to actuate the motor 54.

Further, during the rinsing cycle, the rinsing liquid can be recycled between the tank 60 and the filter group 20.

In practice, the control and command unit 100 is configured so as to open the second opening and closing valve 714 (and the modulating valve 713), so as to enable the flow of rinsing liquid from the first environment A of the casing 21, via the first recycling conduit 71, towards the tank 60, from which it is sourced by the sourcing pump (i.e. the supply pump 132) and re-injected into the first environment A of the filter group 20.

The control and command unit 100 can be configured so as to carry out the rinsing cycle for a predetermined time period.

At the end of the predetermined time period, the control and command unit 100 commands the discharge (block S13) of the casing 21, and/or the tank 60 from the rinsing liquid and the residues of solid and fluid fraction under filtration contained therein.

In practice, the control and command unit 100 is configured so as to open evacuation valves, up to complete emptying of the casing (first environment A) and/or the tank 60.

Thereafter, the control and command unit 100 can be configured so as to repeat the steps described above from block S12 to block S13.

Following the further emptying (block S13) of the filter group 20 (first environment A) and/or the tank 21, the control and command unit 100 is configured such as to start (block S14) a washing cycle, for example a chemical washing, of the filter group 20, for example hot and/or cold water mixed with a chemical additive, such as for example caustic soda.

In practice, the washing cycle includes filling the tank 60 with washing liquid, for example hot and/or cold water, added-to by a dosed quantity (for example by a suitable volumetric doser, not illustrated, and commanded by the control and command unit 100) by opening one or both the selector valves 623. When the tank 60 is full of washing liquid (up to a predetermined level, for example equal to the maximum capacity thereof), the washing cycle includes activating the supply pump 132 or the sourcing pump, so as to transfer the washing liquid from the tank 60 to the first environment A of the casing 21 (by opening the appropriate selector valve 720).

Further, during the washing cycle, the control and command unit 100 can be configured so as to activate the shaker element 50, i.e. to actuate the motor 54.

Further, during the washing cycle, the washing liquid can be recycled between the tank 60 and the filter group 20.

In practice, the control and command unit 100 is configured so as to open the second opening and closing valve 714 (and the modulating valve 713), so as to enable the flow of washing liquid from the first environment A of the casing 21,via the first recycling conduit 71 towards the tank 60, from which it is sourced by the supply pump 132 or the sourcing pump and re-injected into the first environment A of the filter group 20.

The control and command unit 100 can be configured so as to carry out the washing cycle for a predetermined time period.

At the end of the predetermined time period, the control and command unit 100 commands the discharge (block S15) of the casing 21, and/or the tank 60 from the washing liquid and the residues of solid and fluid fraction under filtration contained therein.

In practice, the control and command unit 100 is configured so as to open evacuation valves, up to complete emptying of the casing (first environment A) and/or the tank 60.

It is further possible for the control and command unit 100 includes carrying out a further rinsing cycle, as described in the foregoing in the steps of block S12 and S13.

Thereafter, the control and command unit 100 can be configured so as to repeat the whole filtration cycle described above (blocks S1 to S15).

The invention as it is conceived is susceptible to numerous modifications, all falling within the scope of the claims.

In practice the materials used, as well as the contingent shapes and dimensions, can be any according to requirements, without forsaking the scope of protection of the following claims.

**NUMERICAL REFERENCES**

| | |
|---|---|
| separating group 10 | spacer element 32 |
| support frame 11 | spacer shank 320 |
| ground rests 12 | central cavity 321 |
| inflow conduit 13 | seal rings 322 |
| pre-filter 130 | tie-rods 33 |
| first flow rate meter 131 | filter wall 40 |
| supply pump 132 | external blocking seal ring 41 |
| outflow conduit 14 | internal blocking seal ring 42 |
| second flow rate meter 141 | cloth filter 43 |
| outflow pump 142 | external seal ring 44 |
| outlet conduit 15 | internal seal ring 45 |
| first free end 151 | first environment A |
| second free end 152 | second environment B |
| first open and shut valve 153 | shaker element 50 |
| filter group 20 | rotating shaft 51 |
| casing 21 | transmission 52 |
| bell-shaped body 210 | drive shaft 53 |
| cover 211 | motor 54 |
| inlet 212 | blades 55 |
| first outlet 213 | group 550 |
| second outlet 214 | first end 551 |
| third outlet 215 | second end 552 |
| insulating cope 216 | lateral face 553 |
| entry conduit 217 | tank 60 |
| an exit conduit 218 | first inlet 61 |
| filter chamber 30 | second inlet 62 |
| disc-shaped body 31 | entry pipeline 620 |
| central zone 311 | first branch 621 |
| lugs 314 | second branch 622 |
| through-hole 316 | selector valve 623 |
| outlet 63 | second open and shut valve 714 |
| exit pipeline 630 | third flow rate meter 715 |
| open end 632 | second recycling conduit 72 |
| recycling group 70 | selector valve 720 |
| first recycling conduit 71 | control and command unit 100 |
| first portion 711 | pneumatic switchboard 200 |
| second portion 712 | blocks S1-S16 |
| modulating valve 713 | |

## Claims

1. A method for separation of a solid fraction of a fluid containing the solid fraction, comprising steps of:
**a)** supplying a filter group (20) provided with a filter wall (40) with a quantity of fluid supplied by a supply group;
**b)** filtering the fluid, by means of the filter wall (40), so as to separate the solid fraction from the filtered fluid fraction;
**c)** monitoring at least a parameter indicating a concentration of the solid fraction present in the filter group (20);
**d)** discharging from a first environment A of the filter group (20), located upstream of the filter wall (40) in the crossing direction of the fluid, a part of the solid fraction separated from the filtered fluid fraction in a tank (60), when the monitored parameter is greater than or equal to a determined first threshold value thereof, in such a way to keep the separated solid fraction stored in the tank (60) divided from the fluid to be filtered and from the filtered fluid fraction;
**e)** interrupting the supply of the fluid to be filtered from the supply group once a predetermined volumetric filling threshold value of the tank (60) is reached, and re-injecting thereafter at least a portion of the divided solid fraction stored in the tank (60) into the first environment (A) for further filtration thereof, and
**f)** discharging from the first environment (A) the further filtrated solid fraction separated from the filtered fluid, when the monitored parameter is greater than or equal to a determined second threshold value thereof.

2. The method according to claim 1, wherein the second threshold value is greater than the first threshold value and the first and second threshold value are determined on a basis of a type of fluid to be filtered.

3. The method according to claim 1 or 2, which comprises a step of **g)** regulating a quantity of the solid fraction discharged into the tank (60) at the first threshold value during the discharge step d) and the quantity of fluid to be filtered supplied during the supply step a) as a function of a pressure internally of the first environment (A) and/or as a function of the value of the indicative monitored parameter.

4. The method according to claim 3, wherein the step of regulating g) comprises a step of maintaining, as a preset value, preferably constant, the pressure internally of the first environment (A) and/or the value of the indicative monitored parameter during the step of discharge d) in the tank (60).

5. The method according to any one of claims from 1 to 4, which comprises continuing the supply step a) of the fluid to be filtered during the step of discharge d) of the solid fraction at the first threshold value in the tank (60) up to reaching a predetermined maximum volumetric filling value of the tank (60).

6. The method according to any one of claims from 1 to 5, wherein during the step of discharge f) of the solid fraction at the second threshold value the step of re-injecting e) up to a predetermined minimum volumetric emptying value of the tank (60) is continued.

7. The method according to claim 6, wherein the solid fraction at the second threshold value discharged during the discharge step f) is selectively discharged into the tank (60) or externally of the tank (60).

8. The method according to claim 7, which comprises a step of **h)** regulating a quantity of the solid fraction discharged into the tank (60) at the second threshold value during the discharge step f) and the quantity of solid fraction at the first threshold value re-injected during the reinjecting step e) as a function of a pressure internally of the first environment (A) and/or as a function of the value of the indicative monitored parameter.

9. The method according to claim 8, wherein the step of regulating h) comprises a step of maintaining, as a preset value, preferably constant, the pressure internally of the first environment (A) and/or the value of the indicative monitored parameter during the step of discharge f) of the solid fraction at the second threshold value.

10. The method according to any one of claims from 1 to 9, **characterised in that** it comprises steps of
**i)** continuously shaking the fluid being filtered present in the first environment (A) so as to give the fluid a turbulent motion, preferably with a prevalent direction that is tangential to the filter wall filter wall (40).

11. The method according to any one of claims from 1 to 10, comprising a step of
**j)** removing the liquid fraction from a second environment (B) of the filter group (20), located downstream of the filter wall (40) in the crossing direction of the fluid, continuously during the steps a) to f), preferably during all the steps a) to i).

12. The method according to any one of claims from 1 to 11, **characterised in that** it comprises a step of:
**k)** emptying the filter group (20)from the solid fraction and the liquid fraction and
**I)** rinsing and/or washing the filter group (20) by filling the tank (60) with a rinsing and/or washing liquid and injecting the rinsing and/or washing fluid into the first environment (A).

13. A separating group (10) of a solid fraction from a fluid containing the solid fraction, comprising:
a filter group (20) of a dynamic type comprising at least a filter chamber (30) associated to an inlet (212) connected, by means of an inflow conduit (13), to a supply group for the fluid to be filtered, at least a first outlet (213) for the solid fraction separated from the fluid to be filtered and to a second outlet (214) for a filtered fluid fraction, at least a filter wall (40) located in the filter chamber (30) in such a way as to subdivide the internal volume thereof into two environments, of which a first environment (A) communicating with the inlet (212) and the first outlet (213) and a second environment communicating with the second outlet (214);
- a tank (60) able to receive and store the separated solid fraction and accumulated in the first environment (A) of the filter chamber (30), so as to keep the separated solid fraction divided from the fluid to be filtered and from the filtered fluid fraction;
- a recycling group (70) configured so as to collect at least a portion of the solid fraction stored in the tank (60) and re-inject, by means of an exit pipeline (630) connecting an outlet (63) of the tank (60) to the inflow conduit (13) connect to the inlet (212) of the filter group (20), the portion of collected solid fraction successively into the first environment (A) of the filter chamber (3), and
- selector valves (720) located, respectively, on the exit pipeline (630) and on a portion of the inflow conduit (13) containing a supply pump (132) configured to send fluid to be filtered under pressure towards the inlet (212), the selector valves (720) being configured to selectively open or close the exit pipeline (630) or the inflow conduit (13).

14. The group (10) according to claim 13, wherein the recycling group (70) comprises at least a first recycling conduit (71) connected to the first outlet (213) of the filter group (20) and to the tank (60) and a modulating valve (713) of the first recycling conduit (71) configured for regulating the flow rate of solid fraction to be sent to the tank (60) via the first recycling conduit (71).

15. The group (10) according to any one of the preceding claims from 13 to 14, wherein the recycling group (70) comprises at least a second recycling conduit (72) connected to the tank (60) and to the inlet (212) of the filter group (20) and a pump (132) configured so as to collect the solid fraction from the tank (60) and send it to the first environment (A) of the filter chamber (30) via the second recycling conduit (72) and the inlet (212).

16. The group (10) according to any one of the preceding claims from 13 to 15, **characterised in that** it comprises an inflow conduit (13) connected to the inlet (212), selectively with respect to the second recycling conduit (72), and provided with a pump (132) for supplying the fluid to be filtered.

17. The group (10) according to any one of the preceding claims from 13 to 16, **characterised in that** it comprises washing means of the filter group (20) comprising an entry pipeline (620) of a rinsing/washing liquid into the tank (60) intercepted by a selector valve (623) thereof, and a pump (132) configured for collecting the washing liquid from the tank (60) and sending it to the first environment (A) of the filter chamber (30) via the inlet (212).

18. The group (10) according to any one of the preceding claims from 13 to 17, wherein the filter group 20) comprises a shaker element (50) located in the first environment (A) and configured so as to create a turbulent motion of the fluid to be filtered.

## Patentansprüche

1. Verfahren zur Trennung einer Feststofffraktion eines Fluids, das die Feststofffraktion enthält, umfassend die folgenden Schritte von:
a) Zuführen einer Menge an Fluid, die von einer Zuführungsgruppe zugeführt wird, zu einer Filtergruppe (20), die mit einer Filterwand (40) versehen ist;
b) Filtern des Fluids mittels der Filterwand (40), um die Feststofffraktion von dem gefilterten Fluidanteil zu trennen;
c) Überwachen mindestens eines Parameters, der eine Konzentration der in der Filtergruppe (20) vorhandenen Feststofffraktion angibt;
d) Ablassen eines Teils der Feststofffraktion, die von der gefilterten Fluidfraktion in einen Behälter (60) getrennt wird, aus einer ersten Umgebung (A) der Filtergruppe (20), die sich stromaufwärts von der Filterwand (40) in Querrichtung des Fluids befindet, wenn der überwachte Parameter größer als oder gleich wie ein bestimmter erster Schwellenwert davon ist, auf eine Weise, um die in dem Behälter (60) gespeicherte getrennte Feststofffraktion von dem zu filternden Fluid und von der gefilterten Fluidfraktion getrennt zu halten;
e) Unterbrechen der Zuführung des zu filternden Fluids aus der Zuführungsgruppe, sobald ein vorgegebener volumetrischer Füllschwellenwert des Behälters (60) erreicht ist, und anschließendes erneutes Einspeisen mindestens eines Teils der in dem Behälter (60) gespeicherten getrennten Feststofffraktion in die erste Umgebung (A) für eine weitere Filtration davon, und
f) Ablassen der weiter gefilterten Feststofffraktion, die von dem gefilterten Fluid getrennt ist, aus der ersten Umgebung (A), wenn der überwachte Parameter größer als oder gleich wie ein bestimmter zweiter Schwellenwert davon ist.

2. Verfahren nach Anspruch 1, wobei der zweite Schwellenwert größer als der erste Schwellenwert ist und der erste und zweite Schwellenwert auf der Grundlage einer Art von zu filterndem Fluid bestimmt werden.

3. Verfahren nach Anspruch 1 oder 2, umfassend einen Schritt von
g) Regulieren einer Menge der in den Behälter (60) abgelassenen Feststofffraktion bei dem ersten Schwellenwert während des Ablassschritts d) und der Menge an zu filternder Fluidmenge, die während des Zuführungsschritts a) zugeführt wird, abhängig von einem internen Druck der ersten Umgebung (A) und/oder abhängig von dem Wert des angegebenen überwachten Parameters.

4. Verfahren nach Anspruch 3, wobei der Schritt eines Regulierens g) einen Aufrechterhaltungsschritt des internen Drucks der ersten Umgebung (A) und/oder des Werts des angegebenen überwachten Parameters während des Ablassschritts d) in den Behälter (60) als, vorzugsweise konstanten, Vorgabewert umfasst.

5. Verfahren nach einem der Ansprüche von 1 bis 4, das ein Fortsetzen des Zuführungsschritts a) des zu filternden Fluids während des Ablassschritts d) der Feststofffraktion bei dem ersten Schwellenwert in dem Behälter (60) bis zum Erreichen eines vorbestimmten maximalen volumetrischen Füllwerts des Behälters (60) umfasst.

6. Verfahren nach einem der Ansprüche von 1 bis 5, wobei während des Ablassschritts f) der Feststofffraktion bei dem zweiten Schwellenwert der erneute Einspeiseschritt e) bis zu einem vorbestimmten minimalen volumetrischen Entleerungswert des Behälters (60) fortgesetzt wird.

7. Verfahren nach Anspruch 6, wobei die Feststofffraktion bei dem zweiten Schwellenwert, die während des Ablassschritts f) abgelassen wird, selektiv in den Behälter (60) oder außerhalb des Behälters (60) abgelassen wird.

8. Verfahren nach Anspruch 7, umfassend einen Schritt von
h) Regulieren einer Menge der in den Behälter (60) abgelassenen Feststofffraktion bei dem zweiten Schwellenwert während des Ablassschritts d) und der Menge an Feststofffraktion bei dem ersten Schwellenwert, die während des erneuten Einspeiseschritts e) erneut eingespeist wird, abhängig von einem internen Druck der ersten Umgebung (A) und/oder abhängig von dem Wert des angegebenen überwachten Parameters.

9. Verfahren nach Anspruch 8, wobei der Schritt eines Regulierens h) einen Aufrechterhaltungsschritt des internen Drucks der ersten Umgebung (A) und/oder des Werts des angegebenen überwachten Parameters während des Ablassschritts f) der Feststofffraktion bei dem zweiten Schwellenwert als, vorzugsweise konstanten, Vorgabewert umfasst.

10. Verfahren nach einem der Ansprüche von 1 bis 9, **dadurch gekennzeichnet, dass** es folgende Schritte umfasst
i) kontinuierliches Schütteln des gefilterten Fluids, das in der ersten Umgebung (A) vorhanden ist, um dem Fluid eine verwirbelnde Bewegung zu verleihen, vorzugsweise mit einer vorherrschenden Richtung, die tangential zu der Filterwand (40) ist.

11. Verfahren nach einem der Ansprüche von 1 bis 10, umfassend einen Schritt von
j) Entfernen der flüssigen Fraktion aus einer zweiten Umgebung (B) der Filtergruppe (20), die sich stromabwärts von der Filterwand (40) in Querrichtung der Flüssigkeit befindet, kontinuierlich während der Schritte a) bis f), vorzugsweise während aller Schritte a) bis i).

12. Verfahren nach einem der Ansprüche von 1 bis 11, **dadurch gekennzeichnet, dass** es folgenden Schritt umfasst
k) Entleeren der Feststofffraktion und der flüssigen Fraktion aus der Filtergruppe (20), und
1) Spülen und/oder Waschen der Filtergruppe (20) durch Befüllen des Behälters (60) mit einer Spül- und/oder Waschflüssigkeit und Einspeisen des Spül- und/oder Waschfluids in die erste Umgebung (A).

13. Trenngruppe (10) einer Feststofffraktion von einem Fluid, das die Feststofffraktion enthält, umfassend:
eine Filtergruppe (20) eines dynamischen Typs, umfassend mindestens eine Filterkammer (30), die mit einem Einlass (212) assoziiert ist, der mittels einer Einlassleitung (13) mit einer Zuführungsgruppe für das zu filternde Fluid verbunden ist, mindestens einen ersten Auslass (213) für die von dem zu filternden Fluid getrennte Feststofffraktion und zu einem zweiten Auslass (214) für eine gefilterte Fluidfraktion, mindestens eine Filterwand (40), die sich in der Filterkammer (30) befindet, auf eine Weise, dass das Innenvolumen davon in zwei Umgebungen unterteilt ist, wovon eine erste Umgebung (A) mit dem ersten Auslass (213) verbunden ist und eine zweite Umgebung mit dem zweiten Auslass (214) verbunden ist;
- einen Behälter (60), der in der Lage ist, die getrennte Feststofffraktion, die in der ersten Umgebung (A) der Filterkammer (30) angesammelt ist, aufzunehmen und zu speichern, um die getrennte Feststofffraktion abgeteilt von dem zu filternden Fluid und der gefilterten Fluidfraktion zu halten;
- eine Recycling-Gruppe (70), die konfiguriert ist, um mindestens einen Anteil der in dem Behälter (60) gespeicherten Feststofffraktion zu sammeln und den Anteil der gesammelten Feststofffraktion mittels einer Ausgangsrohrleitung (630), die einen Auslass (63) des Behälters (60) mit der Einlassleitung (13) verbindet, die mit dem Einlass (212) der Filtergruppe (20) verbunden ist, nacheinander erneut in die erste Umgebung (A) der Filterkammer (30) einzuspeisen, und
- Auswahlventile (720), die sich jeweils an der Ausgangsrohrleitung (630) und an einem Abschnitt der Einlassleitung (13) befinden und eine Förderpumpe (132) enthalten, die konfiguriert ist, um das zu filternde Fluid unter Druck zu dem Einlass (212) zu leiten, wobei die Auswahlventile (720) konfiguriert sind, um die Ausgangsrohrleitung (630) oder die Einlassleitung (13) selektiv zu öffnen oder zu schließen.

14. Gruppe (10) nach Anspruch 13, wobei die Recyclinggruppe (70) mindestens eine erste Recyclingleitung (71) umfasst, die mit dem ersten Auslass (213) der Filtergruppe (20) und mit dem Behälter (60) verbunden ist, und ein Modulationsventil (713) der ersten Recyclingleitung (71), die zum Regulieren der Durchflussrate der Feststofffraktion, die über die erste Recyclingleitung (71) zu dem Behälter (60) geleitet werden soll, konfiguriert ist.

15. Gruppe (10) nach einem der vorherigen Ansprüche von 13 bis 14, wobei die Recyclinggruppe (70) mindestens eine zweite Recyclingleitung (72), die mit dem Behälter (60) und mit dem Einlass (212) der Filtergruppe (20) verbunden ist, und eine Pumpe (132), die konfiguriert ist, um die feste Fraktion aus dem Behälter (60) zu sammeln und über die zweite Recyclingleitung (72) und den Einlass (212) zu der ersten Umgebung (A) der Filterkammer (30) zu leiten, umfasst.

16. Gruppe (10) nach einem der vorherigen Ansprüche von 13 bis 15, **dadurch gekennzeichnet, dass** sie eine Einlassleitung (13) umfasst, die mit dem Einlass (212) selektiv in Bezug auf die zweite Recyclingleitung (72) verbunden ist, und mit einer Pumpe (132) zum Zuführen des zu filternden Fluids versehen ist.

17. Gruppe (10) nach einem der vorherigen Ansprüche von 13 bis 16, **dadurch gekennzeichnet, dass** sie Waschmittel der Filtergruppe (20) umfasst, umfassend eine Eintrittsrohrleitung (620) einer Spül-/Waschflüssigkeit in den Behälter (60), die von einem Auswahlventil (623) davon abgefangen wird, und eine Pumpe (132), die zum Sammeln der Waschflüssigkeit aus dem Behälter (60) und zu deren Leiten zu der ersten Umgebung (A) der Filterkammer (30) über den Einlass (212) konfiguriert ist.

18. Gruppe (10) nach einem der vorherigen Ansprüche von 13 bis 17, wobei die Filtergruppe (20) ein Schüttelelement (50) umfasst, das sich in der ersten Umgebung (A) befindet und konfiguriert ist, um eine verwirbelnde Bewegung des zu filternden Fluids zu erzeugen.

## Revendications

1. Méthode pour la séparation d'une fraction solide d'un fluide contenant la fraction solide, comprenant les étapes suivantes :
**a)** fourniture d'un groupe de filtration (20) doté d'une paroi de filtration (40) avec une quantité de fluide fournie par une groupe d'approvisionnement ;
**b)** filtration du fluide, au moyen de la paroi de filtration (40), afin de séparer la fraction solide de la fraction de fluide filtrée ;
**c)** surveillance d'au moins un paramètre indiquant une concentration de la fraction solide présente dans le groupe de filtration (20) ;
**d)** déchargement depuis un premier environnement (A) du groupe de filtration (20), situé en amont de la paroi de filtration (40) dans la direction transversale du fluide, d'une partie de la fraction solide séparée de la fraction de fluide filtrée dans un réservoir (60), lorsque le paramètre surveillé est supérieur ou égal à une première valeur seuil déterminée de ce dernier, de façon à conserver la fraction solide séparée stockée dans le réservoir (60) séparée du fluide à filtrer et de la fraction de fluide filtrée ;
**e)** interruption de l'approvisionnement du fluide à filtrer à partir du groupe d'approvisionnement une fois qu'une valeur seuil de remplissage volumétrique du réservoir (60) prédéterminée est atteinte et réinjection par la suite d'au moins une partie de la fraction solide séparée stockée dans le réservoir (60) dans le premier environnement (A) pour une filtration ultérieure de cette dernière ; et
**f)** déchargement depuis le premier environnement (A) de la fraction solide filtrée ultérieurement séparée du fluide filtré, lorsque le paramètre surveillé est supérieur ou égal à une seconde valeur seuil déterminée de ce dernier.

2. Méthode selon la revendication 1, dans laquelle la seconde valeur seuil est supérieure à la première valeur seuil et la première et seconde valeurs seuil sont déterminées sur une base d'un type de fluide à filtrer.

3. Méthode selon la revendication 1 ou 2, comprenant les étapes suivantes :
**g)** Régulation d'une quantité de la fraction solide déchargée dans le réservoir (60) à la première valeur seuil lors de l'étape de déchargement d) et la quantité de fluide à filtrer fournie lors de l'étape d'approvisionnement a) comme une fonction d'une pression à l'intérieur du premier environnement (A) et/ou comme une fonction de la valeur du paramètre surveillé indicatif.

4. Méthode selon la revendication 3, dans laquelle l'étape de régulation g) comprend une étape de maintien, en tant que valeur prédéfinie, de préférence constante, de la pression à l'intérieur du premier environnement (A) et/ou de la valeur du paramètre surveillé indicatif lors de l'étape de déchargement d) dans le réservoir (60).

5. Méthode selon l'une quelconque des revendications 1 à 4, qui comprend la continuité de l'étape d'approvisionnement a) du fluide à filtrer lors de l'étape de déchargement d) de la fraction solide à la première valeur de seuil dans le réservoir (60) jusqu'à atteindre une valeur de remplissage volumétrique maximale du réservoir (60).

6. Méthode selon l'une quelconque des revendications 1 à 5, dans laquelle lors de l'étape de déchargement f) de la fraction solide à la seconde valeur seuil, l'étape de réinjection e) jusqu'à une valeur de vidage volumétrique minimale prédéterminée du réservoir (60) est continuée.

7. Méthode selon la revendication 6, dans laquelle la fraction solide à la seconde valeur seuil déchargée lors de l'étape de déchargement f) est sélectivement déchargée dans le réservoir (60) ou à l'extérieur du réservoir (60).

8. Méthode selon la revendication 7, qui comprend l'étape suivante :
**h)** régulation d'une quantité de la fraction solide déchargée dans le réservoir (60) à la seconde valeur seuil lors de l'étape de déchargement f) et la quantité de fraction solide à la première valeur seuil réinjectée lors de l'étape de réinjection e) comme une fonction d'une pression à l'intérieur du premier environnement (A) et/ou comme une fonction de la valeur du paramètre surveillé indicatif.

9. Méthode selon la revendication 8, dans laquelle l'étape de régulation h) comprend une étape de maintien, en tant que valeur prédéfinie, de préférence constante, de la pression à l'intérieur du premier environnement (A) et/ou de la valeur du paramètre surveillé indicatif lors de l'étape de déchargement f) de la fraction solide à la seconde valeur seuil.

10. Méthode selon l'une quelconque des revendications 1 à 9, **caractérisée en ce qu'**elle comprend les étapes suivantes :
**i)** agitation continue du fluide filtré présent dans le premier environnement (A), afin de donner un mouvement turbulent au fluide, de préférence avec une direction préférentielle qui est tangentielle à la paroi de filtration (40).

11. Méthode selon l'une quelconque des revendication 1 à 10, comprenant l'étape suivante :
**j)** retrait de la fraction liquide d'un second environnement (B) du groupe de filtration (20), situé en aval de la paroi de filtration (40) dans la direction transversale du fluide, en continue lors des étapes a) à f), de préférence pendant toutes les étapes a) à i).

12. Méthode selon l'une quelconque des revendications 1 à 11, **caractérisée en ce qu'**elle comprend les étapes suivantes :
**k)** vidage du groupe de filtration (20) de la fraction solide et de la fraction liquide, et
**l)** rinçage et/ou lavage du groupe de filtration (20) en remplissant le réservoir (60) avec un liquide de lavage et/ou de rinçage et en injectant le fluide de lavage et/ou de rinçage dans le premier environnement (A).

13. Groupe de séparation (10) d'une fraction solide d'un fluide contenant la fraction solide, comprenant :
- un groupe de filtration (20) d'un type dynamique comprenant au moins une chambre de filtration (30) associée à une entrée (212) connectée, par le biais d'un conduit de flux entrant (13), à un groupe d'approvisionnement pour le fluide à filtrer, au moins une première sortie (213) pour la fraction solide séparée du fluide à filtrer et une seconde sortie (214) pour une fraction de fluide filtré, au moins une paroi de filtration (40) située dans la chambre de filtration (30) de façon à subdiviser le volume interne de cette dernière en deux environnements, dont un premier environnement (A) communiquant avec l'entrée (212) et la première sortie (213) et un second environnement communiquant avec la seconde sortie (214) ;
- un réservoir (60) capable de recevoir et stocker la fraction solide séparée et accumulée dans le premier environnement (A) de la chambre de filtration (30), afin de conserver la fraction solide séparée séparée du fluide à filtrer et de la fraction de fluide filtré ;
- un groupe de recyclage (70) configuré de façon à collecter au moins une partie de la fraction solide stockée dans le réservoir (60) et à réinjecter, au moyen d'une conduite d'échappement (630) connectant une sortie (63) du réservoir (60) au conduit de flux entrant (13) connecté à l'entrée (212) du groupe de filtration (20), la partie de la fraction solide collectée successivement dans le premier environnement (A) de la chambre de filtration (30), et
- vannes de sélection (720) situées, respectivement, sur la conduite d'échappement (630) et sur une partie du conduit de flux entrant (13) contenant une pompe d'approvisionnement (132) configurée pour envoyer un fluide à filtrer sous pression vers l'entrée (212), les vannes de sélection (720) étant configurées pour sélectivement ouvrir or fermer la conduite d'échappement (630) ou le conduit de flux entrant (13).

14. Groupe (10) selon la revendication 13, dans lequel le groupe de recyclage (70) comprend au moins un premier conduit de recyclage (71) connecté à la première sortie (213) du groupe de filtration (20) et au réservoir (60) et une vanne modulatrice (713) du premier conduit de recyclage (71) configurée pour réguler le débit de la fraction solide à envoyer dans le réservoir (60) via le premier conduit de recyclage (71).

15. Groupe (10) selon l'une quelconque des revendications 13 à 14 précédentes, dans lequel le groupe de recyclage (70) comprend au moins un second conduit de recyclage (72) connecté au réservoir (60) et à l'entrée (212) du groupe de filtration (20) et une pompe (132) configurée de façon à collecter la fraction solide dans le réservoir (60) et à l'envoyer dans le premier environnement (A) de la chambre de filtration (30) via le second conduit de recyclage (72) et l'entrée (212).

16. Groupe (10) selon l'une quelconque des revendications 13 à 15 précédentes, **caractérisé en ce qu'**il comprend un conduit de flux entrant (13) connecté à l'entrée (212), sélectivement par rapport au second conduit de recyclage (72), et doté d'une pompe (132) pour approvisionner le fluide à filtrer.

17. Groupe (10) selon l'une quelconque des revendications 13 à 16 précédentes, **caractérisé en ce qu'**il comprend des moyens de lavage du groupe de filtration (20) comprenant une conduite d'entrée (620) d'un liquide de lavage/rinçage dans le réservoir (60) intercepté par une vanne de sélection (623) de ce dernier et une pompe (132) configurée pour collecter le liquide de lavage dans le réservoir (60) et l'envoyer dans le premier environnement (A) de la chambre de filtration (30) via l'entrée (212).

18. Groupe (10) selon l'une quelconque des revendications 13 à 17 précédentes, dans lequel le groupe de filtration (20) comprend un élément d'agitation (50) situé dans le premier environnement (A) et configuré de façon à créer un mouvement turbulent du fluide à filtrer.
